# EUROPEAN PATENT APPLICATION

(11) **EP 1 703 655 A1**
(43) Date of publication of application: **20.09.2006**
(21) Application number: 03785462.7
(22) Date of filing: 24.12.2003
(51) Int. Cl.: H04J 14/02

(54) **A METHOD AND SYSTEM FOR IMPLEMENTING SUB-MULTIPLEX SEGMENT SHARING PROTECT IN ALL-OPTICAL NETWORK**

(71) Applicant: ZTE Corporation, Shenzhen 518057 (CN)
(72) Inventor: WEI, Xiaoqiang, c/o ZTE Plaza, Shenzhen, Guangdong 518057 (CN)
(74) Representative: Strachan, Victoria Jane
(86) International application number: PCT/CN2003/001113
(87) International publication number: WO 2005/062511

(57) **Abstract**

This invention relates to an improved method and device for implementing traffic protection in all-optical network, particularly, relates to a method and device for implementing traffic protection through sharing sub-multiplexing segment in all-optical network by adopting dense wavelength division multiplexing (DWDM) technique. The present invention determines the number of sub-multiplexing segments into which are divided by system wavelength according to actual distribution condition of protected traffic and non-protected traffic in network. The device at least includes: a wave synthesizer at two sides of node, a wave separator at two sides of node and an optical protecting module. The present invention can accomplish a sub-multiplex segment protection function of optical layer, can meet the requirement of multiple accessing traffic, improve availability of system capacity in the case of satisfying partial traffic protection, optimize the usage of system resource, and has strong applicability, can reduce the system cost at the same time.

## Description

### Technical Field

The present invention belongs to optical communication field, and relates to an improved method and device for implementing traffic protect in all-optical network, particularly relates to a method and device for implementing traffic protect through sharing sub-multiplex segment in all-optical network by adopting dense wavelength division multiplexing (DWDM) technique.

### Technical Background

Driven by the development of information, the optical communication technique has been quickly developed, the DWDM technique is increasingly widely used due to its characteristics of big capacity, transparency of service, rich performance detection and available protection of optical layer, and becomes the basic platform for constructing all-optical network.

With the continuous increasing requirement for information, on the basis of the increasing maturity of after trunk DWDM technique, metropolitan area network also pays more attention to DWDM technique, thereafter, the research and application of product of metropolitan area optical OADM (optical add-drop multiplexer) has developed, which makes the DWDM technique closer to user layer. Some new requirements to the OADM products are also generated, such as the diversity of access service, which not only requires to be able to access SDH (synchronous digital hierarchy) with different rate levels and IP (internet protocol) service with SDH frame format as well as ATM service (asynchronous transfer mode), but also its product is used for accessing data service, such as GE (Gigabit Ethernet), FC (fiber channel), ESCON (Enterprise System interconnecting) etc., while what is the most important is to raise requirement on the reliability of data service, requiring to provide protecting function for the data service in optical layer. Currently, the main protecting types provided by the optical layer area are BPSR, BLSR (bi-directional Line Switched Ring) (see Technical Requirementfor Metropolitan Optical Transport Network Wavelength Division Multiplexing Ring Network, YD/T 1205-2002).

BLSR is bi-directional optical line protecting switching, which can realize protecting function for all the services in multiplexing segment by providing optical protecting function of multiplexing segment layer. Next, the BLSR will be described in detail.

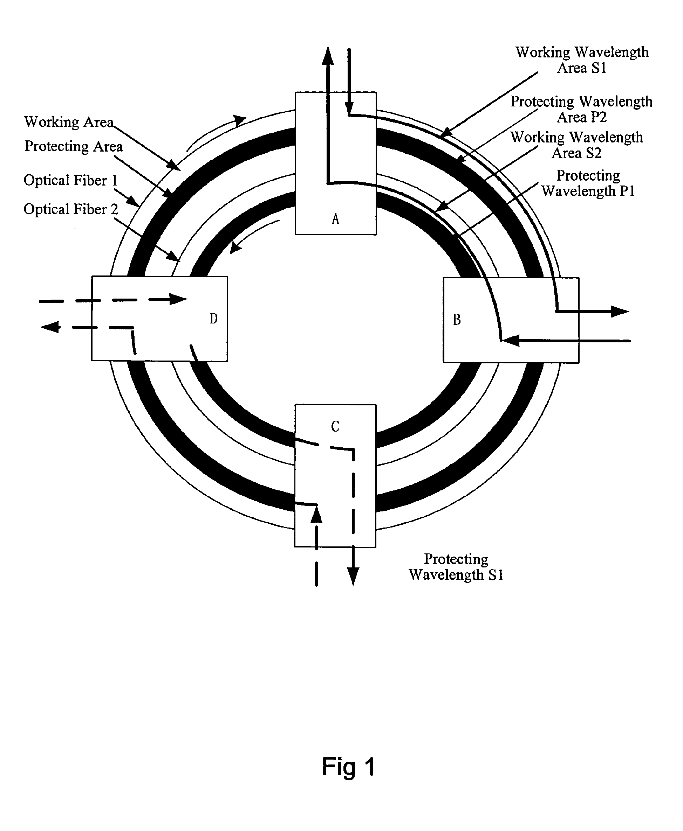

As for BLSR, as shown in fig.1, two neighboring nodes on the bi-directional optical line sharing protection ring can be connected only by two optical fibers. One fiber carries working wavelength S 1 and protecting wavelength P2 simultaneously, and the other fiber carries working wavelength S2 and protecting wavelength P1 simultaneously, i.e. one half wavelength of each optical fiber can be set to carry working signal S, and the other half can be set to carry protecting signal P. The working wavelength S 1 carried by one optical fiber can be protected by the protecting wavelength P1 carried by another fiber in reverse direction along the ring, vice versa. This allows bi-direction transmission of working service.

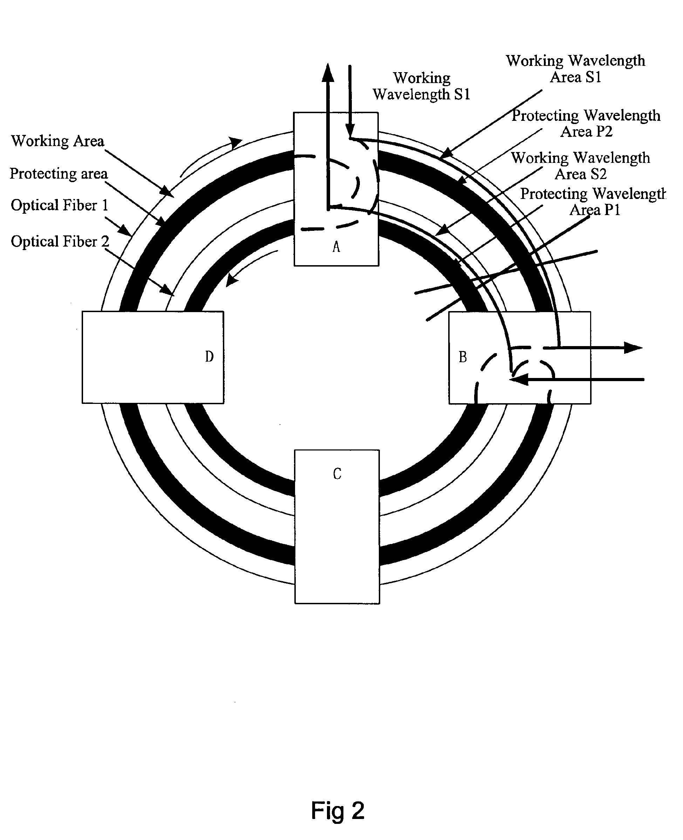

The principle of protecting switching is shown in fig.2, supposing an bi-fiber bi-directional line protecting switching ring with N wavelengths, on the clockwise optical fiber, the wavelengths with number 1~N/2 are working wavelengths and the wavelengths with number N/2+1~N are protecting wavelengths. On the counter-clockwise optical fiber, the wavelengths with number 1~N/2 are protecting wavelengths and the wavelengths with number N/2+1~N are working wavelengths. The working wavelength with number m is protected by corresponding protecting wavelength, i.e. wavelength with number m in the reverse direction. Both the working capacity and protecting capacity are N/2 wavelengths.

A working wavelength with any number not only can be the add of one node and the drop of another node, but also it can be distributed according to the traffic quantity (Ring Wavelength Channel Organization), the wavelength with a same number can be used by more than two nodes, that is one wavelength can be used repeatedly. (see Technical Requirement for Metropolitan Optical Transport Network Wavelength Division Multiplexing Ring Network, YD/T 1205-2002).

However, in the current actual application, there are various types of service in network, some are data service needing protection of optical layer, including SAN service and IP service; some are SDH service and POS service which don't need protection of optical layer, but need protection of service layer. The current BLSR protection is carried out by simply dividing the ring network system with N wavelengths into working wavelength and protecting wavelength, which both occupy N/2 of wavelengths, so it can not meet the actual service application of various situations, and doesn't have flexibility. The reason is that if there are several data services needing protection and several SDH services not needing protection in a ring network simultaneously, the system requirement for data service needing protection and SDH service not needing protection can not be met according to the wavelengths dividing way of BLSR protection, when protecting the data service, the SDH service also has to be protected by the optical layer, this will bring some unnecessary system faults to SDH service due to the service layer and optical layer providing protection simultaneously, and at the same time the available capacity of system will also be reduced.

### Summary of the Invention

This invention aims to provide a method and device for implementing sub-multiplex segment sharing protection in all-optical network, which is a practically applicable protecting solution of optical layer-sub-multiplex segment protection (Sub-OMSP). This invention can decide the allocation of wavelength according to the distribution of system protected traffic and non-protected traffic, and provide a device for realizing such process, with flexibility and practicality.

The technical scheme of the present for realizing sub-multiplex segment sharing protection in all optical network includes two parts: one part is a scheme for allocating wavelength of sub-multiplex segment; the other is a device for realizing sub-multiplex segment protection function based on the scheme of allocating wavelength.

The present invention is realized as follows:
a method for implementing sub-multiplex segment sharing protect in all-optical network, with characterized in:
determining the number of sub-multiplex segments into which system wavelength are divided according to actual distribution condition of protected traffic and non-protected traffic in network;
choosing appropriate number of sub-multiplex segment wavelength for realizing traffic protect according to the number of the protected traffic, and
not protecting the traffic which needn't protect of optical layer in the optical layer;
said sub-multiplex segments can be either divided in equal wavelength, or divided in unequal wavelength;
there are two wavebands with same number of wavelength in said sub-multiplex segments, for carrying protected traffic, and being used for work and protection respectively;
a method for implementing sub-multiplex segment sharing protect in all-optical network, comprising the following steps of:
   step 1: classifying system traffic into those needing protect of optical layer and those not needing protect of optical layer;
   step 2: reasonably dividing system waveband according to the number of wavelength used by the traffic needing protect of optical layer;
   step 3: reasonably selecting wave synthesizer and wave separator to realize waveband division; and
   step 4: realizing sub-multiplex segment protection by switching a working route and a protecting route;
a device for implementing sub-multiplex segment sharing protect in all-optical network, at least comprising:
   a wave synthesizer at two sides of node: for realizing a function of synthesizing wave of multiple sub-wavebands, synthesizing waveband of traffic wavelength needing protection and waveband of traffic wavelength not needing protection, and then outputting;
   a wave separator at two sides of node: for realizing a function of dividing the wavebands of the whole system into multiple sub-wavebands, so as to process the traffic wavelength needing protection and traffic wavelength not needing protection respectively; and
   an optical protecting module: for realizing switch of working route and protection route, and guaranteeing the normal realization of protection function of the sub-multiplex segment;
   said wave synthesizer and wave separator adopt a narrow-band separating/ synthesizing filter or a red-blue-band filter;
   said optical protecting module further includes:
   an optical switch at two sides of node: for realizing switch of working route and protection route of inner and outer ring; and
   a resonant-vibration-preventing optical switch: for avoiding self-exciting phenomenon of protection loop in normal working condition.

The method and device of the present invention can realize the sub-multiplex segment protecting function of optical layer, and can satisfy multiple accessing traffic requirement. In consideration of actual application type and requirement of accessing service, according to whether the traffic is protected traffic or non-protected traffic as well as the number of the protected traffic in the system, the present invention reasonably divides wavebands and realizes protection. The present invention can improve availability of system capacity in the case of satisfying partial traffic protection, can optimize the usage of system resource, its flexible working wavelength division and simple protection realizing device can greatly improve the application of the optical layer protection in actual network, has strong practicability, and can reduce the system cost at the same time.

### BriefDescription of Drawings

Fig.1 is a bi-directional optical line sharing protection switch ring in normal operation;
Fig.2 is a bi-directional optical line sharing protection switch ring after occurring protection switch;
Fig.3 is the flowchart of sub multiplexing segment protection method;
Fig.4 is the schematic view of sub multiplexing segment wavelength allocation;
Fig.5 is the structure schematic view of sub multiplexing segment protection device;
Fig.6 is the inner block diagram of optical protection module in normal situation;
Fig.7 is the inner block diagram of optical protection module in fault situation;
Fig.8 is the flowchart of sub multiplexing segment protection process;
Fig.9 is the division diagram of sub multiplexing segment protection waveband;
Fig. 10 is the wavelength route diagram before switching of bi-fiber bi-directional 8 wavelength sub multiplexing segment protection ring;
Fig.11 is the wavelength route diagram after switching ofbi-fiber bi-directional 8 wavelength sub multiplexing segment protection ring.

### Preferred Embodiment of the Invention

The sub-multiplex segment of the present invention refers to dividing the whole system wavelength into multiple wavelength groups each of which consists of several wavelengths in a system, wherein the wavelengths can be either continuous or discontinuous, and the number of wavelengths of wavelength groups can be either equal or unequal.

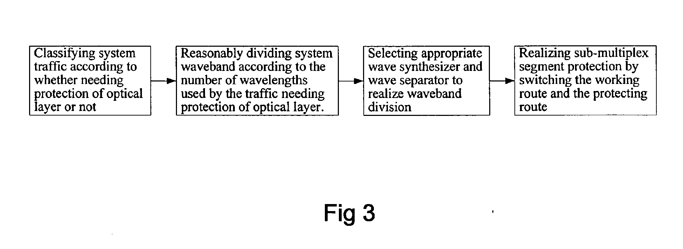

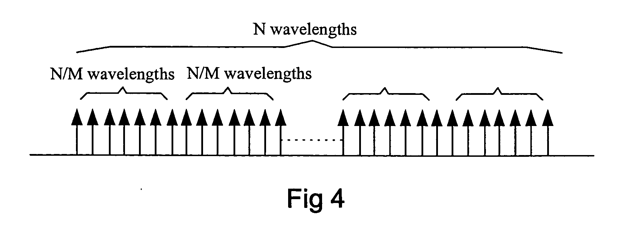

According to the protecting feature of BLSR and the protecting requirement for traffic with actually different configuration, the present invention provides a wavelength allocating scheme for sub-waveband as shown in fig.3, i.e. dividing the system wavelength into M sub-wavebands, and determining the number of sub-wavebands according to the distribution condition of protected service and non-protected service in network. This kind of wavelength allocating scheme for sub-wavebands divides the wavelength in the system into several sub-multiplex segments, thus, the wavelength number granularity comprised by the sub-multiplex segment is smaller, conducive to choosing appropriate number of sub-multiplex segment wavelength to realize traffic protection according to the number of protected service in the system. Meanwhile, the traffic not needing protection of optical layer is not done protecting process in the optical layer, thereby avoiding the disadvantage in BLSR protecting way of putting the protected traffic and non-protected traffic in one multiplexing segment resulting from the cursory division of wavelengths, and the protecting way of sub-multiplex segment is more flexible and reliable, can improve the usage of system resource, and can meet the requirement of distribution for different traffics. The division granularity of sub-waveband can be divided according to actual requirement, for example, as for a DWDM optical transmitting system with 32 wavelengths, if the data traffic needing protection is 4 wavelengths, then the whole waveband can be divided into several sub-wavebands, among which there is two sub-wavebands with 4 wavelengths where the traffic needing protection is distributed, thereby realizing the protection of sub-multiplex segment of 4 wavelengths. If the traffic needing protection is less than 8 wavelengths while more than 4 wavelengths, then the whole waveband can be divided into several sub-wavebands, among which there is two sub-wavebands with 8 wavelengths to realize protection of sub-multiplex segment of 8 wavelengths. What shown in fig.4 is a wavelength division scheme for diving N system wavelengths into M sub-wavebands, the wavelength number of each waveband can be N/M, i.e. dividing with equal waveband, and the number of traffic needing protection is no more than N/M. The waveband dividing rule can be either dividing with equal wavelength or dividing with unequal wavelength, no matter what kind of scheme, it has to ensure that there are two wavebands with equal number of wavelength for protecting the carrying of service, used for working and protection respectively.

According to the wavelength allocating scheme of sub-waveband, the present invention further provides a device for realizing sub-multiplex segment protection. Next, the structure and realizing principle of the device will be described.

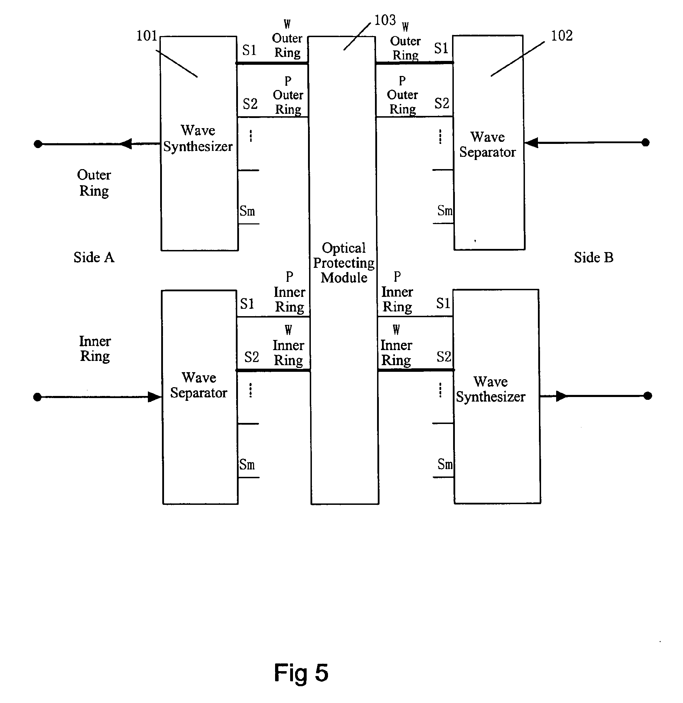

The device of the present invention mainly includes: a wave synthesizer 101, a wave separator 102, an optical protecting module 103, with the wave synthesizer and wave separator located at both side A and side B. Fig.5 gives the detail.

Fig.5 is the structure of sub-multiplex segment protecting device, what shown in it is a node in bi-fiber bi-directional ring network, in which, the functions of the wave synthesizer, wave separator and optical protecting module are as follows:
wave synthesizer: for realizing a function of synthesizing wave multiplexing of multiple sub-wavebands, synthesizing wavebands of traffic wavelength needing protection and wavebands of traffic wavelength not needing protection, and then outputting;
wave separator: for realizing a function of dividing the wavebands of the whole system into multiple sub-wavebands, so as to process the traffic wavelength needing protection and traffic wavelength not needing protection respectively; and
optical protecting module: for realizing switch of working route and protection route, and guaranteeing the normal realization of protection function of the sub-multiplex segment.

As shown in fig.5, the whole waveband is divided into M sub-wavebands, in which, the traffic not needing protection is processed directly, and t is not protected when the optical fiber occurs fault. S 1 and S2 carry the wavelength for the traffic needing protection, in which, the traffic working wavelength on the outer ring is S1 waveband, and the traffic working wavelength on the inner ring is S2 waveband. The S2 waveband on the outer ring is the protecting wavelength of the inner ring traffic, the S 1 waveband on the inner ring is the protecting wavelength of the outer ring traffic. When the optical fiber occurs fault, the traffic is switched from the working wavelength to the protecting wavelength through the protecting device, so as to realize the protecting function of traffic through different routes.

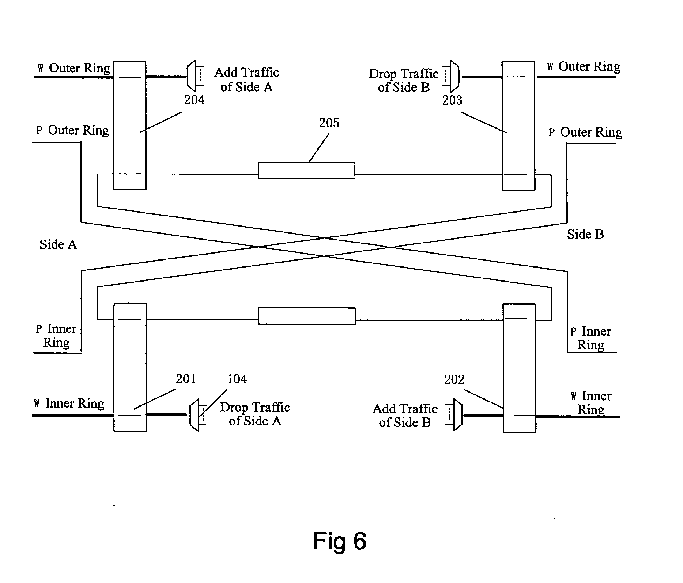

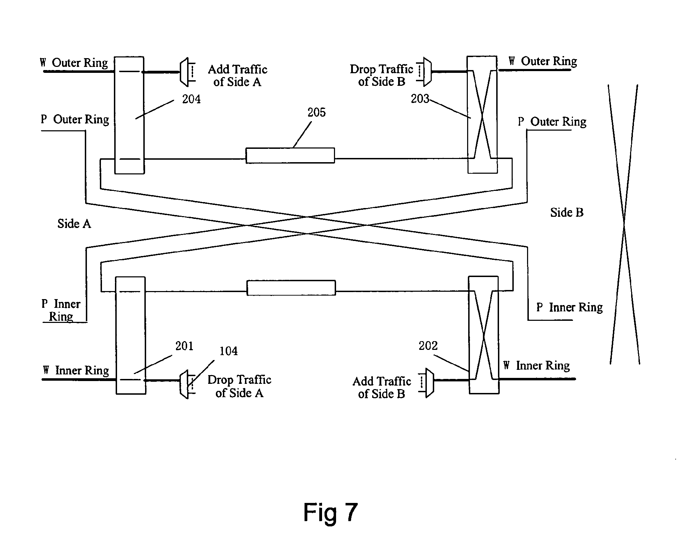

Fig.6 and fig.7 is the inner block diagram of the optical protecting module in normal condition and in the case of node B occurring fault respectively, including inputting optical switch 201 at side A, outputting optical switch 202 at side B, inputting optical switch 203 at side B, outputting optical switch 204 at side A and resonant-vibration-preventing optical switch 205. Switches 201, 202, 203, 204 realize the switch between working route and protecting route of inner ring and outer ring, and 205 is used for avoiding the self-exciting phenomenon of the protecting ring in normal condition.

Route Connecting mode: dividing the input light into M wavebands by using wave separator 102, among which there are two protection-related groups, one is working wavelength (the thicker real line in fig.5 to fig.7), the other is protecting wavelength (the thinner real line in fig.5 to fig.7). The working wavelength directly connects with the inputting optical switch 201 or 203 in this direction, while the protecting wavelength directly connects with the inputting optical switch 203 or 201 in the corresponding opposite direction. When the line is normal, the four optical switches 201, 202, 203, 204 will be in straight-through state, the working wavelength input at side A (S2 waveband of the inner ring) will be output at side B after passing inputting optical switch 201 of side A of the lower half of the node, the narrow band separating/synthesizing filter 104, the outputting optical switch 202 of side B and the wave synthesizer 101 of side B; the protecting wavelength input at side A (S 1 waveband of inner ring) connects with the inputting optical switch 203 of side B, then after passing resonant-vibration-preventing optical switch 205, it connects with the outputting optical switch 204 of side A, then be synthesized with other sub-wavelength segment by the wave synthesizer 101 of side B and then be output at side B, thus accomplishes the route protection; the working wavelength input at side B (S 1 waveband of the outer ring) will be output at side A after passing the inputting optical switch 203 of side B, narrow band separating/synthesizing filter 104, the outputting optical switch 204 of side A and the wave synthesizer 101 of side A; the protecting wavelength input at side B connects with the inputting optical switch 201 of side A, then after passing the resonant-vibration-preventing optical switch 205, it connects with the outputting optical switch 202 of side B, then be synthesized with other sub-wavelength segment by the wave synthesizer 101 of side A and then be output at side A, thus accomplishes the route protection;

When the fiber of side B occurs fault, the two optical switches 202 and 203 of side B will be in switching across state. The inner ring add traffic of the node is carried by the add working wavelength of side B, and is switch output, through the outputting optical switch 202 of side B, to the wave synthesizer 101 of side A for synthesizing and finally is output in outer ring of side A. While the drop traffic of the node in outer ring is carried by the protecting wavelength which is input at side A, and is switch output to the drop of side B. The cross-band fault of side A is as the same way.

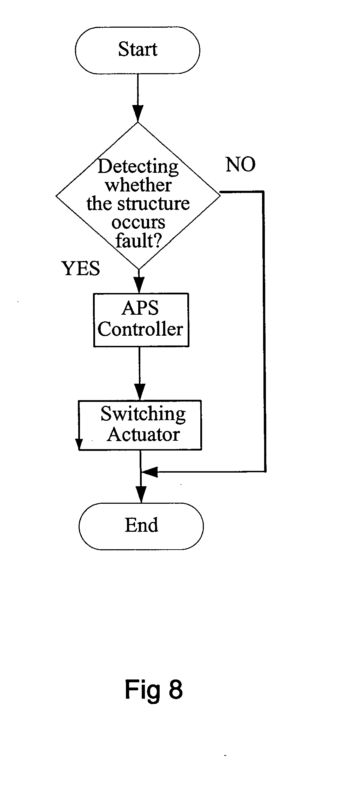

The device for realizing sub-multiplex segment protection includes: a wave separator and a wave synthesizer for dividing wavebands, an amplifying unit for detecting faults, an optical switch in the optical protecting module for operating switching, and an APS (automatic protection switching) for protocol answering. The flowchart for realizing the device is as fig.8: when fault occurs, the detecting veneer (multiplexing and demultiplexing veneer or peripheral optical amplifying veneer) detects fault and reports to APS controller. After passing the APS protocol answering, the APS controller sends switching command for controlling the action of the performing organization, the performing organization performs switching after receiving the command, thereby accomplishing the protecting function.

By employing the above device, the system wavelength can be divided into several sub-wavebands, and the traffic needing protection and the traffic not needing protection can be distributed into different sub-wavebands, in which, the traffic waveband needing protection realizes route protection switching through protecting device, the traffic waveband not needing protection will not be processed, thereby realizing the sub-multiplex segment protection in optical network.

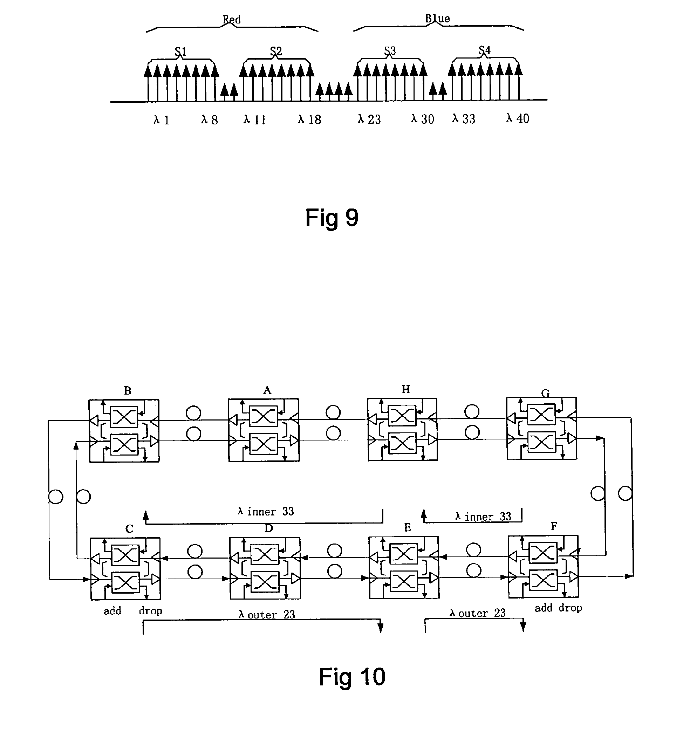

Next, the embodiment of technical scheme will be described in combination with fig.9 to fig.11:

The embodiment is to realize protection of an 8 wavelengths sub-multiplex segment in a 32 wavelengths system, in which the wavelength capacity of both inner and outer ring network is 32 wavelengths, the working wavelength is 24 wavelengths, the protecting wavelength is 8 wavelengths. The sub-waveband division is realized by employing the red-blue band filter.

The allocating scheme of working wavelength and protecting wavelength is as follows: the wavelength capacity of the whole system is divided into 4 sub-wavebands, which are S1(λ₁-λ₈), S2(λ₁₁-λ₁₈), S3(λ₂₃-λ₃₀) and S4(λ₃₃-λ₄₀), in which, the separation and synthesis of sub-wavebands are realized by red-blue band filter. In order to divide the waveband easily, black wavelengths are reserved between each waveband, and there are 8 black wavelengths unused in the whole bandwidth. The allocation of working wavelength and protecting wavelength in inner ring and outer ring for the 8 wavelengths needing protection is complementary. As shown in fig.9, S 1 and S2 wavebands carry the traffic not needing protection, while S3 and S4 wavebands carry the 8 traffic needing protection. The working wavebands in inner ring is S1, S2 and S4, among which S1 and S2 carry traffic not needing protection and S4 carries traffic needing protection, and the protecting waveband in inner ring is S3, for protecting the working traffic in outer ring needing protection. The working wavebands in the outer ring are S1, S2 and S3, among which S1 and S2 carry the traffic not needing protection, while S3 carries the traffic needing protection, the protecting waveband in outer ring is S4, for protecting the working traffic in the inner ring needing protection.

As for data traffic needing protection, the working wavebands in the inner and outer ring are S4 and S3 respectively, taking a pair of traffic for example, the λₒᵤₜₑᵣ₂₃ and λᵢₙₙₑᵣ₃₃ in fig.9 is a pair of traffic wavelengths, for transporting traffic between C and E.

As shown in fig.10, when the line is normal, the traffic transporting route between nodes C and E is:
C→E: the add traffic of node C is, passing node D, cut-through to node E through the working wavelength λ_{outer 23} in the outer ring;
E→C: the add traffic of node E is, passing node D, cut-through to node C through the working wavelength λ_{inner 33} in the inner ring;

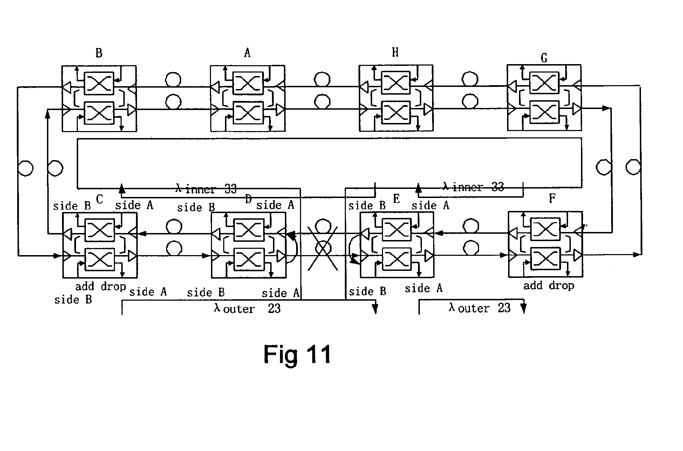

As shown in fig.11: when the optical fiber between node D and node E occurs fault, the optical switches 201 and 204 at the right side of node D (i.e. the optical switch of side A) and the optical switches 202 and 203 at the left side of node E (i.e. the optical switch of side B) switch, and are in a crossing state. The route for traffic between nodes C and E under the protection of the bi-fiber bi-directional 8 wavelengths sub-multiplex segment is:
C→E: the add traffic of node C is on the side A add of node C, passes node D through working wavelength λ_{outer 23} of outer ring, and returns through optical switch 204 of side A at the right side of node D, that is, the traffic is switched to the protecting wavelength λᵢₙₙₑᵣ₂₃ of inner ring, reaches node E through nodes D, C, B, A, H, G and F, and is input at side A of inner ring at node E, in which, the protecting wavelength route of inner ring is across outputted to drop of side B of outer ring through the inputting optical switch 203 of side B. By employing the optical protecting device of node D and node E, the traffic reaches node E by going through different routes through protecting wavelength of inner ring.
E→C: the add traffic of node E is on the side B add of node E, and is carried by working wavelength λ_{inner 33} of inner ring. Because the left side optical switches 202 and 203 (i.e. optical switches at side B) switch, the add traffic is switched to the protecting wavelength λ_{outer 33} of outer ring, reaches node D through nodes F, G, H, A, B and C, and is inputted at side B of node D; because the right side optical switches 201 and 202 of node D (i.e. optical switches at side A) switches, the protecting wavelength λ_{outer 33} inputted at side B is switched to working wavelength λ_{inner 33} of inner ring, and is directly through to node C through the inner ring of node D, and is dropped at side A of the inner ring of node C. Thus, the function of sub-multiplex segment protection when in abnormal condition is realized.

The present invention provides a method and device for sub-multiplex segment sharing protection in optical network employed in dense wavelength division multiplexing system. It realizes traffic protection in actual network application by using the method of dividing the system wavelength into sub-wavebands as well as the protecting device. By employing wavelength division of waveband, the selection of traffic protection granularity in network configuration can be achieved. Compared to conventional multiplexing segment protection, in the present invention, the traffic needing protection and the traffic not needing protection are carried by different sub-wavebands, thereby producing system flexibility and improving the actual using capacity of system. The present invention can be widely used in OADM ring network and other all-optical network.

## Claims

1. A method for implementing sub-multiplex segment sharing protect in all-optical network, with **characterized in**:
determining the number of sub-multiplex segments into which system wavelength are divided according to actual distribution condition of protected traffic and non-protected traffic in network.

2. The method for implementing sub-multiplex segment sharing protect in all-optical network of claim 1, with **characterized in**:
choosing appropriate number of sub-multiplex segment wavelength for realizing traffic protect according to the number of the protected traffic;
not protecting the traffic which needn't protect of optical layer in the optical layer.

3. The method for implementing sub-multiplex segment sharing protect in all-optical network of claim 1, in which:
said sub-multiplex segments can be either divided in equal wavelength, or divided in unequal wavelength.

4. The method for implementing sub-multiplex segment sharing protect in all-optical network of claim 1, in which:
there are two wavebands with same number of wavelength in said sub-multiplex segments, for carrying protected traffic, and being used for work and protection respectively.

5. A method for implementing sub-multiplex segment sharing protect in all-optical network, comprising the following steps of:
step 1: classifying system traffic into those needing protect of optical layer and those not needing protect of optical layer;
step 2: reasonably dividing system waveband according to the number of wavelength used by the traffic needing protect of optical layer;
step 3: reasonably selecting wave synthesizer and wave separator to realize waveband division; and
step 4: realizing sub-multiplex segment protection by switching a working route and a protecting route.

6. A device for implementing sub-multiplex segment sharing protect in all-optical network, at least comprising:
a wave synthesizer at two sides of node: for realizing a function of synthesizing wave multiplexing of multiple sub-wavebands, synthesizing waveband of traffic wavelength needing protection and waveband of traffic wavelength not needing protection, and then outputting;
a wave separator at two sides of node: for realizing a function of dividing the wavebands of the whole system into multiple sub-wavebands, so as to process the traffic wavelength needing protection and traffic wavelength not needing protection respectively; and
an optical protecting module: for realizing switch of working route and protection route, and guaranteeing the normal realization of protection function of the sub-multiplex segment.

7. The device for implementing sub-multiplex segment sharing protect in all-optical network of claim 6, in which:
said wave synthesizer and wave separator adopt a narrow-band separating/ synthesizing filter or a red-blue-band filter.

8. The device for implementing sub-multiplex segment sharing protect in all-optical network of claim 6, in which said optical protecting module further includes:
an optical switch at two sides of node: for realizing switch of working route and protection route of inner and outer ring; and
a resonant-vibration-preventing optical switch: for avoiding self-exciting phenomenon of protection loop in normal working condition.
